# DEMANDE DE BREVET EUROPEEN

(11) **EP 0 533 571 A1**
(43) Date de publication de la demande: **24.03.1993**
(21) Numéro de dépôt: 92402552.1
(22) Date de dépôt: 17.09.1992
(51) Int. Cl.: A01B 63/111, A01D 33/14

(54) **Dispositif de contrôle de la position d'un organe de travail à usage agricole ou de traitement de sol**

(30) Priorité: 18.09.1991 FR 9111495
(71) Demandeur: S.A. MOREAU, F-59159 Noyelles Sur Escaut (FR)
(72) Inventeur: Jette, Etienne, F-59159 Marcoing (FR)
(74) Mandataire: Colas, Jean-Pierre

(57) **Abrégé**

Dispositif pour contrôler la position d'un organe de travail, comme une effeuilleuse de betteraves (6), reposant sur le sol par un essieu (7) et reliée à un véhicule (1) à deux essieux (2, 3) par une liaison articulée (8, 9) avec un vérin (12) pour contrôler la hauteur de l'organe de travail au-dessus du sol, en agissant sur la force d'appui de l'essieu (7) sur le sol. Un capteur (20) est sensible à la force du vérin (12) et des moyens sont prévus pour ramener cette force une valeur de consigne quand elle s'en est écarté.

## Description

La présente invention est relative à un appareillage à usage agricole ou de traitement du sol, et plus particulièrement à un dispositif de contrôle de la position d'un organe de travail à usage agricole, ou de traitement de sol, destiné à équiper un tel appareillage, comprenant un organe porteur à deux essieux pourvus de roues reposant sur le sol, et un organe de travail ayant un essieu pourvu de roues reposant sur le sol, l'organe porteur et l'organe de travail étant reliés par une articulation parallèle aux essieux.

De tels appareillages sont courants dans l'agriculture et on peut indiquer que les arracheuses-chargeuses de betteraves actuellement commercialisées appartiennent doublement à ce type. En effet, elles comprennent un châssis porteur équipé de quatre roues, ce qui constitue deux essieux formés chacun de deux roues disposées sur une même ligne transversale, et elles portent, d'une part, à l'avant, une effeuilleuse reliée au châssis de façon articulée et supportée par deux roues disposées en parallèle et reposant sur le sol, et, d'autre part, au centre, un système d'arrachage, avec socs ou disques, également relié au châssis de façon articulée, et supporté par deux roues disposées en parallèle et reposant sur le sol. Dans d'autres réalisations, une effeuilleuse ou un ensemble d'arrachage, tels qu'on vient de les décrire, est montée à l'arrière d'un tracteur.

Dans tous les cas, il importe de contrôler avec précision la position des outils, comme les rotors d'effeuillage, les socs ou les disques, par rapport au sol. Placer les roues de l'organe de travail sur la même ligne transversale que les outils, ne résout pas le problème, car ces roues enfoncent plus ou moins dans le sol selon la dureté de celui-ci.

On peut songer à établir une position de consigne fixe de l'organe de travail par rapport à l'organe porteur, et prévoir, éventuellement, des moyens pour ramener l'organe de travail dans cette position de consigne s'il s'en est écarté. Une telle méthode est décrite dans GB-A-1 106 129. Il est clair qu'elle est peu satisfaisante, car la position de l'organe de travail par rapport au sol variera, par exemple selon la pente du terrain ou le degré de remplissage d'une trémie montée sur l'organe porteur.

On peut aussi définir une hauteur de consigne de l'organe de travail par rapport au sol, et prévoir des moyens pour ramener l'organe de travail à la hauteur de consigne quand il s'en est écarté.

Pour cela, comme dans FR-A-2 063 924, on équipe l'organe de travail d'un capteur de position constitué en général d'un patin ou d'une roulette glissant ou roulant sur le sol et poussé contre celui-ci avec une force à peu près constante, avec un organe sensible à la position relative du patin ou de la roulette et de l'organe de travail. Il est usuel, pour un fonctionnement plus régulier, de prévoir deux capteurs placés des deux côtés de l'organe de travail.

Les signaux émis par l'organe sensible sont comparés avec une valeur de consigne, et des signaux de commande émis en réponse pour faire varier la force qui tend à soulever ou abaisser l'organe de travail.

Cette technique donne en général satisfaction. Elle présente cependant pour inconvénient que le capteur, qui comprend, par exemple, un patin ou une roulette avec son essieu, un bras porteur articulé ou coulissant, un ressort disposé pour pousser le patin ou roulette, et l'organe sensible, est assez coûteux et fragile. Comme l'ensemble est de petites dimensions et de faible inertie, les signaux de l'organe sensible présentent des variations importantes en liaison avec les irrégularités du sol, qu'il est nécessaire de "lisser" avec soin, ce qui augmente encore le coût.

Une autre méthode consiste à établir une pression de consigne de l'organe de travail sur le sol,et prévoir, éventuellement, des moyens pour ramener cette pression à la valeur de consigne si elle s'en est écartée.

Selon GB-A-985 272,la pression sur le sol des outils de travail est la résultante du poids propre de ces outils et de l'action d'un ressort agissant entre un bras porte-outils et le châssis.Il n'est pas décrit de réglage de la force du ressort.Une variation de la hauteur de la partie du châssis sur laquelle est fixé le ressort, sous l'effet, par exemple, des irrégularités du sol, modifie la pression sur le sol.

Dans FR-A-2 343 412, on décrit un dispositif du même genre,mais où le ressort est supprimé.Un vérin de relevage est associé à un accumulateur de pression.Lors de la mise en action de l'organe de travail,le vérin est relié au réservoir sous pression à travers un clapet anti-retour qui maintient dans le vérin une pression résiduelle.Le vérin joue alors un rôle analogue à celui du ressort de GB-A-985 272. On notera que les irrégularités du sol entrainent des variations de la pression dans le vérin,au-dessous de la valeur limite.Ces variations ne sont négligeables que si le volume de l'accumulateur de pression est très important par comparaison avec celui du vérin.

La présente invention se rattache au type de méthode qu'on a décrit en dernier.

Elle a pour but de fournir un dispositif qui assure que les irrégularités du sol ne puissent pas avoir d'influence appréciable sur la qualité du travail exécuté,en particulier sur la hauteur de l'outil par rapport au sol.

Pour obtenir ce résultat, l'invention fournit un dispositif de contrôle de la position d'un organe de travail à usage agricole ou de traitement de sol, destiné à équiper un appareillage mobile comprenant un organe porteur à deux essieux ayant chacun au moins une roue roulant sur le sol, et un organe de travail ayant un essieu dont au moins une roue roule sur le sol, une tringle ou un bras articulé à une de ses extrémités à l'organe porteur et relié par une autre extrémité à l'organe de travail, un vérin disposé entre l'organe porteur et l'organe de travail de façon que son action se combine avec celle du poids propre de l'organe porteur pour que la roue exerce sur le sol une pression contrôlée, caractérisé en ce qu'il est prévu au moins un capteur sensible à la force du vérin, et des moyens pour ramener ladite force à une valeur de consigne quand le capteur indique qu'elle s'en est écartée.

La présence d'un circuit de commande pourvu d'un capteur sensible au paramètre qu'on veut contrôler permet un travail d'une grande régularité.

Par rapport aux dispositifs cités plus haut et comportant un capteur pourvu d'un patin ou roulette en contact avec le sol, l'invention procure l'avantage qu'on peut utiliser des capteurs de faible coût, de grande fiabilité et peu encombrants, disponibles dans le commerce.

En particulier, on peut prévoir que le capteur est une jauge de contrainte placée sur le pivot d'une articulation choisie parmi celles qui relient l'organe porteur et le vérin à la tringle ou bras, et les signaux émis par le capteur sont envoyés à un bloc de commande relié à un distributeur électro-hydraulique qui commande l'envoi de fluide sous pression au vérin.

On notera, comme autre avantage, que le capteur peut être placé à une distance appréciable du sol, dans une situation peu exposée aux chocs et au salissement.

Comme toute l'inertie de l'organe de travail entre en jeu, les fluctuations des signaux de l'organe sensible du capteur sont considérablement plus amorties que dans l'art antérieur.

Le seul paramètre qui, dans la technique de l'invention, peut influer sur la hauteur de l'outil par rapport au sol, est la plus ou moins grande dureté du sol.Pour en tenir compte, on prévoit, de préférence, que le dispositif comprend des moyens pour commander manuellement ou automatiquement, à volonté, la pression dans le vérin, et des moyens pour transformer une valeur de la force du vérin, atteinte par commande manuelle, en une valeur de consigne, et pour afficher ensuite, simultanément, ladite valeur de consigne et la valeur instantanée de la force du vérin.

L'expérience montre que les variations de dureté du sol sont assez progressives pour permettre à l'opérateur de modifier en conséquence la valeur de consigne.

L'invention va maintenant être décrite de façon plus détaillée à l'aide d'un exemple pratique illustré avec les dessins parmi lesquels:

Figure 1 est une vue schématique partielle d'une arracheuse-chargeuse de betteraves, montrant la disposition de l'effeuilleuse.

Figure 2 est une vue analogue de l'arracheuse-chargeuse , montrant la disposition de l'ensemble d'arrachage.

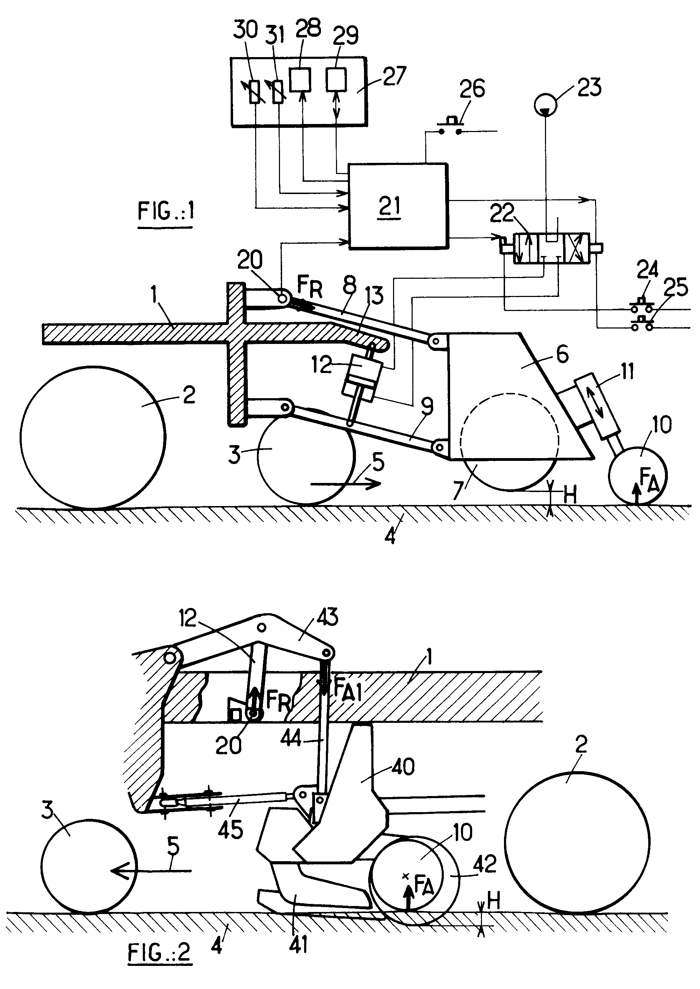

La machine représentée à la figure 1 comporte un châssis 1 figuré de façon symbolique, et équipé de quatre roues 2, 3 reposant sur le sol 4. Ces roues sont disposées, de façon classique, sur deux lignes transversales par rapport à la direction de marche indiquée par la flèche 5, et qui constitue ce qu'on appelle des "essieux", même si les roues sont indépendantes. L'effeuilleuse 6, également figurée de façon symbolique, comporte un rotor 7 dont la hauteur H, au-dessus du sol 4, doit être contrôlée avec précision et maintenue à une valeur constante, qui dépend des circonstances.

L'effeuilleuse est reliée au châssis 1 par une double articulation comprenant deux tringles 8, 9, montées à pivot, d'une part, sur le châssis 1 et, d'autre part, sur l'effeuilleuse, de telle façon qu'elle constitue, avec le châssis et l'effeuilleuse, un parallélogramme articulé qui empêche un basculement de l'effeuilleuse d'avant en arrière par rapport au châssis 1. En fait, la tringle 9 est constituée de deux tringles formant une fourche. Une roue d'appui 10 est reliée à l'effeuilleuse avec interposition d'un dispositif 11 de réglage approximatif manuel de la position relative de la roue 10 par rapport à l'effeuilleuse 6. La roue 10 repose sur le sol, pendant le travail. Un vérin hydraulique 12 est intercalé entre une pièce d'appui 13 solidaire du châssis et une des tringles 9. Ce vérin est à double effet, dans l'exemple décrit, mais cela n'est pas obligatoire, il exerce, par l'intermédiaire de la tringle 9, sur l'effeuilleuse 6 et la roue d'appui 10, une force qui tend à faire varier la hauteur H du rotor 7 au-dessus du sol 4.

On comprendra aisément que la tringle 9 se comporte comme un levier, et que la force exercée par le vérin 12 sur la tringle 9, est compensée par des forces qui s'exercent sur les pivots des articulations des tringles 8 et 9. Ainsi, la force FA d'appui de la roue 10 sur le sol est proportionnelle à une force de réaction FR qui s'exerce sur le pivot 8 reliant le châssis 1 à l'une des tringles 8 ou 9. On a désigné par 20 un capteur d'effort constitué par une jauge de contrainte, placée sur le pivot reliant la tringle 8 au châssis 1. Il est clair que le capteur 20 aurait pu être placé sur un autre pivot. Les signaux émis par le capteur 20 sont envoyés à un bloc de commande 21 lui-même relié à un distributeur 22, qui commande l'envoi d'huile sous pression, fournie par une pompe 23, à l'une ou l'autre des chambres du vérin, de façon à agir pour augmenter ou diminuer la hauteur H. Des interrupteurs 24, 25 sont également prévus pour commander manuellement les déplacements du distributeur 22, le bloc de commande 21 étant alors mis hors d'action par un commutateur électrique 26, qui fait passer de la commande manuelle à la commande automatique.

Les interrupteurs 24 à 26 sont groupés sur un tableau de commande 27, contrairement à ce qu'on a indiqué sur la figure, pour des raisons de clarté. Le tableau de commande 27 porte en outre deux afficheurs numériques 28, 29, dont on va expliquer le fonctionnement, ainsi qu'un potentiomètre 30 de réglage de la sensibilité, c'est-à-dire du temps de réponse du bloc de commande aux signaux du capteur 20, de façon à obtenir des lectures stables sur les afficheurs 28, 29. Un autre potentiomètre 31 sert à l'étalonnage relatif des afficheurs 28 et 29. Pour régler la hauteur H du rotor d'effeuilleuse 7 par rapport au sol, l'opérateur actionne l'interrupteur 26 pour se mettre en position de commande manuelle. A l'aide des interrupteurs 24 et 25, il fait varier la hauteur H jusqu'à obtenir un résultat jugé satisfaisant. Pendant ce temps, l'afficheur 28 est hors circuit, et l'afficheur 29 indique une mesure de la force appliquée par le vérin 12, telle qu'elle résulte des indications du capteur 20, multipliées par un coefficient convenable. Lorsque l'opérateur estime avoir obtenu un travail correct, il actionne l'interrupteur 26, pour le placer en commande automatique. Le bloc de commande 21 met alors en mémoire l'indication qui figure sur l'afficheur 29, et qui devient la valeur de consigne, et l'affiche sur l'afficheur 28. L'afficheur 29 indique à partir de ce moment la valeur instantanée de la force appliquée par le vérin 12, et permet à l'opérateur de se rendre compte de l'écart entre cette valeur instantanée et la valeur de consigne. Il n'a plus à intervenir sur la commande, sauf au cas où l'inspection visuelle montre que le résultat obtenu a cessé d'être satisfaisant.

La figure 2 montre, de façon schématique, une disposition conforme à l'invention dans le cas des outils d'arrachage des betteraves, dans le cas d'une machine arracheuse-chargeuse. Les éléments qui correspondent à ceux de la figure 1 sont affectés des mêmes repères.

On retrouve le châssis 1, équipé de roues 2 et 3 reposant sur le sol. L'équipage d'arrachage 40 équipé de patins de guidage 41 et de disques d'arrachage 42, est soutenu par des roues d'appui 10, et il est relié au châssis 1 par des bras articulés 43, auxquels il est relié par une tringle 44 également articulée à ses deux extrémités. Une barre de traction 45 sert à transmettre au châssis 1 une partie des efforts résultant du travail d'arrachage. Un vérin 12 agit entre le châssis 1 et le bras 43. A la différence de la réalisation de la figure 1, le capteur 20 est placé ici directement sur l'articulation du vérin 12 au châssis 1.

La partie hydraulique et électrique du dispositif est la même que pour la figure 1 et n'a donc pas été représentée. Comme le montre la figure, la force FR exercée par le vérin est proportionnelle à une force FA1 exercée par l'extrémité du bras 43 sur le levier 44, et on comprendra aisément que cette force FA1 est elle-même proportionnelle à la force FA exercée par les roues d'appui 10 sur le sol.

On observera que si le capteur 20, au lieu d'être sensible à la force du vérin 12, émettait des signaux correspondant à l'allongement de ce vérin, le paramètre mesuré serait l'angle entre les deux parties de l'articulation, car une relation fixe existe entre cet angle et la longueur du vérin. La partie hydraulique et électrique du dispositif serait inchangée.

L'homme de métier comprendra que les dispositions qu'on a décrites conviennent également dans le cas où l'arracheuse-chargeuse est remplacée par une arracheuse non chargeuse, ou dans le cas où l'organe de travail est entraîné par un tracteur.

## Revendications

1. Dispositif de contrôle de la position d'un organe de travail (6, 40) à usage agricole ou de traitement de sol, destiné à équiper un appareillage mobile comprenant un organe porteur (1) à deux essieux ayant chacun au moins une roue (2, 3) roulant sur le sol, et un organe de travail ayant un essieu dont au moins une roue (10) roule sur le sol, une tringle (8, 9) ou un bras (43) articulé à une de ses extrémités à l'organe porteur et relié par une autre extrémité à l'organe de travail, un vérin (12) disposé entre l'organe porteur et l'organe de travail de façon que son action se combine avec celle du poids propre de l'organe porteur pour que la roue (10) exerce sur le sol une pression contrôlée,
caractérisée en ce qu'il est prévu au moins un capteur (20) sensible à la force du vérin, et des moyens pour ramener ladite force à une valeur de consigne quand le capteur indique qu'elle s'en est écartée.

2. Dispositif selon la revendication 1, caractérisé en ce que le capteur (20) est une jauge de contrainte placée sur le pivot d'une articulation choisie parmi celles qui relient l'organe porteur et le vérin à la tringle ou bras, et les signaux émis par le capteur sont envoyés à un bloc de commande (21) relié à un distributeur électro-hydraulique (22) qui commande l'envoi de fluide sous pression au vérin.

3. Dispositif selon l'une des revendications 1 ou 2, caractérisé en ce qu'il comprend des moyens pour commander manuellement ou automatiquement, à volonté, la pression dans le vérin (20), et des moyens pour transformer une valeur de la force du vérin, atteinte par commande manuelle, en une valeur de consigne, et pour afficher ensuite, simultanément ladite valeur de consigne et la valeur instantanée de la force du vérin.

4. Dispositif selon l'une des revendications 1 à 3, caractérisé en ce que l'organe de travail est une effeuilleuse de betteraves entraînée par un tracteur, une arracheuse ou une arracheuse-chargeuse.

5. Dispositif selon l'une des revendications 1 à 3, caractérisé en ce que l'organe de travail comprend les outils d'arrachage de betteraves d'une arracheuse ou arracheuse-chargeuse.
